# EUROPEAN PATENT SPECIFICATION

(11) **EP 0 494 707 B1**
(45) Date of publication and mention of the grant of the patent: **26.06.1996**
(21) Application number: 92200001.3
(22) Date of filing: 03.01.1992
(51) Int. Cl.: A23D 9/00

(54) **Oil blends**
Ölmischungen
Mélanges d'huiles

(30) Priority: 10.01.1991 GB 9100497
(43) Date of publication of application: 15.07.1992
(73) Proprietor: UNILEVER N.V., NL-3013 AL Rotterdam (NL); UNILEVER PLC, London EC4P 4BQ (GB)
(72) Inventor: Van Bodegom, Bertus Marinus, Unilever Research, NL-3133 AT Vlaardingen (NL); Decio, Maurizio, I-00041 Albano, Laziale, Roma (IT); Verschuren, Jozephus Johannes, Unilever Research, NL-3133 AT Vlaardingen (NL)
(74) Representative: Sikken, Antonius H. J. M.

(56) References cited:
- EP-A- 0 304 115
- EP-A- 0 421 504
- BE-A- 572 414
- FR-A- 2 660 160
- US-A- 2 554 872
- US-A- 3 026 207
- PATENT ABSTRACTS OF JAPAN vol. 4, no. 151 (C-28)23 October 1980

## Description

The present invention relates to a an oil blend suitable for use as a salad oil, and in particular to a oil blend containing olive oil.

The term "salad oil" is applied to oils which remain substantially liquid in a refrigerator, that is, at a temperature of around 4°C (40°F). A standard method for the evaluation of salad oils is described in BAILEY's INDUSTRIAL OILS and FATS Volume 2, 4th edition at page 317. The test involves cooling the oil and determining whether the oil becomes turbid after a defined cold residence time. While oils according to the invention described hereafter are primarily intended as salad oils they have a range of other culinary uses including shallow and deep frying or the preparation of dressings.

Manufacture of olive oil for use as a salad dressing requires nothing other than expression of the oil from the oil bearing fruit and clarification of the oil by filtration. Such a process commonly includes so called cold-pressing and the product is referred to as "virgin olive oil". Commercial olive oil is often a blend of olive oils from a number of different sources, some or much of which may be refined olive oil. Blends of around 10-20%wt virgin olive oil and around 80-90% refined olive oil are used commonly and are referred to herein as "commercial olive oil".

Cold-pressed oils, particularly peanut, sesame, safflower and sunflower seed oils are also available in the marketplace.

BAILEY (cit. ultra) states that sunflower, safflower and corn oils may be suitable for use as salad oils within the definition of salad oils given above, but are likely to need dewaxing before use.

Soybean and rapeseed oils may also be suitable for use as salad oil after partial hydrogenation to remove linolenic acid and some other polyunsaturates, which are otherwise prone to chemical change on storage.

Olive oil is decribed in BAILEY as unique in that it is used for it's flavour whereas the other oils are refined prior to use. Many examples of refining processes are given in BAILEY (cit. ultra) as are examples of the off-flavour components which are generated on storage of unrefined edible oils.

Us 3,026,207 describes a margarine composition where the problem of oils with a high content of poly-unsaturated fatty acids is solved by using an O/W-emulsion - in contrast to the usual W/O-emulsion - and by applying a continuous water phase with a specific composition.
BE 572 414 deals with a mixture of olive oil with another edible oil.
JP 55/96075 mentions a mixture of mustard oil with olive oil. EP 304 115 describes a mixture of a marine oil with a vegetable oil for example olive oil.

There is a need for salad oils of improved nutritional quality and reduced cost.

We have now determined that an oil blend comprising at least 2% of unrefined olive oil and at least 10% of one or more unrefined liquid vegetable oils comprising at least 20% linoleic acid is sufficiently stable on storage to be used as a salad oil. Without wishing to be bound by theory we believe that the off-flavour components produced from the non-olive component are to a large extent masked by the unrefined olive oil.

Unrefined vegetable oils are characterised by the presence of quite large amounts of tocopherols (vitamin E family) and colouring agents including chorophylls and other plant pigments, especially including β-carotenes (closely related to vitamin A). In blends with olive oil the colouring agents contribute to the overall hue of the blend and compensate for the dilution of the colour of the olive oil. It is believed that the tocopherols may have some anti-oxidative activity, and both the vitamin components may have nuitritive value.

Preferably the unrefined olive oil content of the blend lies in the range 5-30% and in particular in the range 6-14%. In particular 10% olive oil by weight on oil blend enables a low cost to be combined with an acceptable taste.
Typically, the vegetable oils are selected from the group comprising; sunflower, safflower, soybean, cottonseed, groundnut and grapeseed. These oils are suitable for inclusion in relatively large amounts. Moreover these oils comprise relatively large amounts of poly-unsatured fatty acids. The use of liquid oil or a blend of such oils at a level of from 70-95% is preferred.

Refined oils can be included in the blend, which can comprise up to 88% of a refined vegetable oil selected from the group comprising refined sunflower, safflower, soybean, cottonseed, groundnut, rapeseed, refined olive and grapeseed oils. As an alternative or in addition to these refined oils, unrefined vegetable oils, other than olive oil, having a high level of oleic acid can be employed. These include the oils obtained from high oleic acid varieties of sunflower, soybean and rapeseed oils.

In particular, unrefined sunflower oil at a level of around 60% in combination with around 30% refined soybean oil gives good results.

Olive oil comprises some 10% of linoleic acid residues, whereas sunflower oils suitable for cold use comprise some 55-70% linoleic acid, and soybean oils around 50-65% linoleic acid; consequently a blend of 10% olive with 90% of these two vegetable oils comprises around and preferably more than 50% linoleic acid residues, around 10-35% mono-unsaturated fatty acid residues and low levels of saturated fatty acids, each being expressed in terms of total fatty acids present.

Optionally the salad oil blend comprises other refined or unrefined oils selected from the group comprising maize, linseed, sesame, hazelnut, walnut, mustard and almond. These oils are suitable for inclusion as flavour carriers and colouring agents in relatively low amounts. The use of small quantities of essential oils as additional or alternative flavouring agents is not hereby excluded.

It is believed that the combination of vegetable oils containing tocopherols and fish oils produce a blend product which has an enhanced stability against oxidation of the very long chain poly-unsaturated fatty acids found in the fish oil. This long chain fatty acids, particularly the omega-3 eicosapentanoic and docosahexanoic acids are believed to have beneficial health effects. Consequently it is envisaged that formulations according to the present invention may comprise up to 20% of refined fish or other marine oil.

It is envisaged that minor amounts of a viscosity increasing fat replacer may be incorporated in the salad oil blend.

In order that the present invention may be better understood the following illustrative examples are given.

### EXAMPLES I-VII:

Salad oil Blends of unrefined oils with olive oil were made up by blending oilstocks as given in Table 1 (all percentages being expressed a weight% on blend). It should be noted that the bean oil used (BO) was refined whereas the other vegetable oils (SF,SA and AR) were unrefined.

**TABLE 1**

| blend | OV | SF | SA | BO | AR |
|---|---|---|---|---|---|
| I | 10 | 60 | - | 30 | - |
| II | 5 | 70 | 25 | - | - |
| III | 10 | 30 | 30 | 30 | - |
| IV | 10 | 90 | - | - | - |
| V | 20 | - | 50 | 30 | - |
| VI | 20 | - | 20 | 50 | 10 |
| VII | 20 | - | 20 | 40 | 20 |

In the above table the following abbreviations are used:
OV: unrefined olive oil,
SF: unrefined high linoleic acid content sunflower oil,
SA: unrefined high linoleic acid content safflower oil,
BO: refined soybean oil,
AR: unrefined peanut oil.

These blends were compared with oil blends of virgin olive oil, refined olive oil and blends of refined vegetable oils.
For blends I-IV a simple comparison determined that the flavour and colour of the blends were more similar to those of commercial olive oil than to refined salad oil and that, surprisingly, the flavour and colour of the oil blend was more similar to pure virgin olive oil than to a commercial olive oil.

For blends V-VII a double blind comparison was performed between the blend and samples of high quality commercial olive oil (with 20% virgin olive oil and 80% refined olive oil) and unrefined vegetable oils (safflower and sunflower). In each case with blends V-VII the taste panel ranked the samples as very much closer to the olive oil sample than the unrefined vegetable oil sample. Preference scores are given in Table 2, for comparisons between blends V-VII on a sunflower-olive scale (SF/OV) and a safflower/olive scale (SA/OV). For further comparison a sample of refined sunflower oil was introduced into the test as SF*. The percentages are the panel scores for the preference the blend is 'more like olive'.

**TABLE 2**

| Blend | | SF/OV | SA/OV | SF*/OV |
|---|---|---|---|---|
| High SA | V | 80% | 50% | 100% |
| High BO | VI | 100% | 75% | 100% |
| High BO/AR | VII | 100% | 100% | 100% |

It can be seen that even in the self-comparison of the high safflower blend V with a unrefined SA and olive oil, the panel was undecided as to whether the sample V was the expensive, high-quality commercial olive oil or the lower cost unrefined safflower.

In a separate experiment a sample of blend I was exposed to intermittent sunlight in a clear glass bottle for a period of ten months, by leaving the bottle standing in front of a west-facing window. On examination, after ten months, the sample had a slight, paint-like off note but was still acceptable for use as a salad oil.

## Claims

1. A salad oil blend comprising at least 2% of unrefined olive oil and at least 10% of one or more unrefined liquid vegetable oils comprising at least 20% linoleic acid.

2. A salad oil blend as claimed in claim 1 wherin the unrefined olive oil content of the blend lies in the range 5-30%wt.

3. A salad oil blend as claimed in claim 2 wherein the unrefined olive oil content of the blend lies in the range 6-14%wt.

4. A salad oil blend as claimed in claim 1 wherein the unrefined vegetable oil or oils are selected from the group comprising; sunflower, safflower, soybean, cottonseed, groundnut and grapeseed.

5. A salad oil blend as claimed in claim 4 wherein the unrefined vegetable oil or oils are present at a level of from 70-95%wt.

6. A salad oil blend as claimed in claim 1 further comprising one or more oils selected from the group comprising maize, linseed, sesame, hazelnut, walnut, mustard and almond.

7. A salad oil blend as claimed in claim 1 further comprising 1-88%wt of a refined vegetable oil.

8. A salad oil blend as claimed in claim 1 wherein the refined vegetable oil is selected from the group comprising sunflower, safflower, soybean, cottonseed, groundnut, rapeseed, refined olive and grapeseed oils.

9. A salad oil blend as claimed in claim 1 further comprising an essential oil.

10. A salad oil blend as claimed in claim 1 further comprising not more than 20%wt of a refined marine oil.

## Patentansprüche

1. Salatölmischung, umfassend mindestens 2% unraffiniertes Olivenöl und mindestens 10% eines oder mehrerer unraffinierter, flüssiger pflanzlicher Öle, enthaltend mindestens 20% Linolsäure.

2. Salatölmischung nach Anspruch 1, worin der unraffinierte Olivenölgehalt der Mischung im Bereich von 5-30 Gew.-% liegt.

3. Salatölmischung nach Anspruch 2, worin der unraffinierte Olivenölgehalt der Mischung im Bereich von 6-14 Gew.-% liegt.

4. Salatölmischung nach Anspruch 1, worin das unraffinierte pflanzliche Öl oder die unraffinierten pflanzlichen Öle aus der Sonnenblumen-, Saflor-, Soja-, Baumwoll-, Erdnuß- und Traubenkernöl umfassenden Gruppe ausgewählt ist/sind.

5. Salatölmischung nach Anspruch 4, worin das unraffinierte pflanzliche Öl oder die unraffinierten pflanzlichen Öle in einer Menge von 70-95 Gew.-% vorliegt/vorliegen.

6. Salatölmischung nach Anspruch 1, die ferner eines oder mehrere Öle enthält, das/die aus der Mais-, Lein-, Sesam-, Haselnuß-, Walnuß-, Senf- und Mandelöl umfassenden Gruppe ausgewählt ist/sind.

7. Salatölmischung nach Anspruch 1, die ferner 1-88 Gew.-% eines raffinierten pflanzlichen Öls umfaßt.

8. Salatölmischung nach Anspruch 1, worin das raffinierte pflanzliche Öl aus der Sonnenblumen-, Saflor-, Soja-, Baumwoll-, Erdnuß-, Raps-, raffiniertes Oliven- und Traubenkernöl umfassenden Gruppe ausgewählt worden ist.

9. Salatölmischung nach Anspruch 1, die ferner ein etherisches Öl umfaßt.

10. Salatölmischung nach Anspruch 1, die ferner nicht mehr als 20 Gew.-% eines raffinierten Seetieröls umfaßt.

## Revendications

1. Mélange d'huiles de table comprenant au moins 2% d'huile d'olive non raffinée et au moins 10% d'une (ou plusieurs) huile végétale liquide non raffinée comprenant au moins 20% d'acide linoléique.

2. Mélange d'huiles de table selon la revendication 1, dans lequel la teneur en huile d'olive non raffinée du mélange se situe dans la gamme des 5-30% en poids.

3. Mélange d'huiles de table selon la revendication 2, dans lequel la teneur en huile d'olive non raffinée du mélange se situe dans la gamme des 6-14% en poids.

4. Mélange d'huiles de table selon la revendication 1, dans lequel l'huile (ou les huiles) végétale non raffinée est choisie parmi les huiles de tournesol, carthame, soja, coton, arachides et pépins de raisin.

5. Mélange d'huiles de table selon la revendication 4, dans lequel l'huile végétale non raffinée (ou les huiles) est présente en une proportion de 70 à 95% en poids.

6. Mélange d'huiles de table selon la revendication 1, qui comprend en outre une (ou plusieurs) huile choisie parmi l'huile de maïs, lin, sésame, noisettes, noix, moutarde et amandes.

7. Mélange d'huiles de table selon la revendication 1, qui comprend en outre 1 à 88% en poids d'huile végétale non raffinée.

8. Mélange d'huiles de table selon la revendication 1, dans lequel l'huile végétale raffinée est choisie parmi les huiles de tournesol, carthame, soja, coton, arachides, colza, olive raffinée et pépins de raisin.

9. Mélange d'huiles de table selon la revendication 1, comprenant en outre une huile essentielle.

10. Mélange d'huiles de table selon la revendication 1, comprenant en outre pas plus de 20% en poids d'une huile marine raffinée.
